# EUROPÄISCHE PATENTANMELDUNG

(11) **EP 4 030 595 A1**
(43) Veröffentlichungstag der Anmeldung: **20.07.2022**
(21) Anmeldenummer: 21152087.9
(22) Anmeldetag: 18.01.2021
(51) Int. Cl.: H02K 9/28, H02K 17/42, H02K 17/24, H02K 7/18, F03D 9/25, H01R 39/08

(54) **DYNAMOELEKTRISCHE MASCHINE MIT KÜHLUNG DES SCHLEIFRINGSYSTEMS**

(71) Anmelder: Flender GmbH, 46395 Bocholt (DE)
(72) Erfinder: Binder, Herbert, 94127 Neuburg (DE); Brunner, Georg, 84364 Bad Birnbach (DE); Devingtel, Nicole, 94081 Fürstenzell (DE); Friedl, Daniel, 94081 Fürstenzell (DE); Garhammer, Thomas, 94124 Buechlberg (DE); Gruber, Robert, 94099 Ruhstorf (DE); Hraska, Lorenz, 84371 Triftern (DE); Memminger, Oliver, 94127 Neuburg a. Inn (DE); Ortmeier, Günther, 94099 Ruhstorf a. d. Rott (DE); Reisinger, Matthias, 94099 Ruhstorf a. d. Rott (DE); Schifferer, Klaus, 94152 Neuhaus am Inn (DE); Sentef, Markus, 94099 Ruhstorf (DE)
(74) Vertreter: Michalski Hüttermann & Partner Patentanwälte mbB

(57) **Zusammenfassung**

Die Erfindung betrifft eine dynamoelektrische Maschine (24), insbesondere doppelt gespeiste Asynchronmaschine (ASM) mit
- einem Stator (25) und einem auf einer Welle (4) drehfest angeordneten Rotor (27) mit jeweils einem Wicklungssystem (26,28), wobei das Wicklungssystem (28) des Rotors (27) über ein Schleifringsystem (1) elektrisch kontaktierbar ist,
- einer elektrischen Energieübertragungseinheit des Schleifringsystems (1), insbesondere einer Bürsteneinheit (14), wobei pro elektrischer Phase eine oder mehrere Bürsten (15) einem Schleifring (3) zugeordnet sind, wobei die Bürsten (15) an einer Bürstenhalterung (22) angeordnet sind,
- einem Schleifringkörper (2) des Schleifringsystems (1), der axial hintereinander angeordnete, einer elektrischen Phase zugeordnete Schleifringe (3) aufweist, die voneinander isoliert beabstandet sind, wobei der Schleifringkörper (2) mit der Welle (4) drehfest verbunden ist und zumindest abschnittsweise zwischen der Innenseite des Schleifringkörpers (2) und der Welle (4) einen axial beidseitig offenen Hohlraum (11) aufweist.

## Beschreibung

Die Erfindung betrifft eine dynamoelektrische Maschine, insbesondere eine doppelt gespeiste Asynchronmaschine mit einem Schleifringsystem, als Generator einer Windkraftanlage.

Bei doppelt gespeisten Asynchronmaschinen wird im Rotor ein Drehstromsystem eingeprägt. Zur Stromübertragung wird dabei ein Schleifringsystem verwendet. Bei einem solchen Schleifringsystem wird über stationäre Bürsten das elektrische Drehstromsystem auf Schleifringe und damit den rotierenden Teil der Maschine - den Rotor - übertragen. Dabei wird das Drehstromsystem von den Schleifringen über entsprechende Leiter an die Läuferwicklung des Rotors geführt.

Ein derartiges Schleifringsystem für eine dynamoelektrische Maschine, insbesondere einer doppelt gespeisten Asynchronmaschine, kommt beispielsweise bei Windkraftanlagen zum Einsatz. Hier besteht der Bedarf, dass die elektrischen Maschinen bzw. die Generatoren und ihre Komponenten immer kompakter gestaltet werden. Dies führt dazu, dass bei gleichbleibender Baugröße die Schleifringkomponenten thermisch immer höher belastet werden, da die Temperaturen, insbesondere von Schleifringen, Schleifringbürsten und Bürstenhalter stark ansteigen.

Somit besteht ein Bedarf, sämtliche Komponenten der elektrischen Maschine, insbesondere auch das Schleifringsystem möglichst effizient zu kühlen, um so zu vermeiden, dass die zulässigen Höchsttemperaturen überschritten werden und der Betrieb des Generators nicht mehr gewährleistet werden kann.

Die steigenden Temperaturen im Schleifringsystem, die durch immer höhere Leistungen verursacht werden, wurden bisher durch Vergrößerung der Oberflächen (Schleifring, Bürsten, Gehäuse) versucht zu kompensieren, so dass sich die Temperaturen wieder im zulässigen Bereich befinden. Zusätzlich sorgt ein Lüfter im Schleifringgehäuse für Luftzirkulation, indem Luft von außen (Innenraum der Gondel) durch das gesamte Schleifringsystem geführt wird und somit für die notwendige Kühlung des Systems sorgt.

Des Weiteren ist aus der EP 3 322 047 A1 eine Schleifringeinheit bekannt, bei der Isoliersegmente zwischen Schleifringen Ausprägungen zur Kühlung aufweisen.

Ausgehend davon liegt der Erfindung deshalb die Aufgabe zugrunde ein Schleifringsystem einer dynamoelektrischen Maschine, insbesondere einer doppeltgespeisten Asynchronmaschine, vor allem einer Windkraftanlage zu verbessern.

Die Lösung der gestellten Aufgabe gelingt durch eine dynamoelektrische Maschine, insbesondere doppelt gespeiste Asynchronmaschine (ASM) mit
- einem Stator und einem auf einer Welle drehfest angeordneten Rotor mit jeweils einem Wicklungssystem, wobei das Wicklungssystem des Rotors über ein Schleifringsystem elektrisch kontaktierbar ist,
- einer elektrischen Energieübertragungseinheit des Schleifringsystems, insbesondere einer Bürsteneinheit, wobei pro elektrischer Phase eine oder mehrere Bürsten einem Schleifring zugeordnet sind, wobei die Bürsten an einer Bürstenhalterung angeordnet sind,
- einem Schleifringkörper des Schleifringsystems, der axial hintereinander angeordnete, einer elektrischen Phase zugeordnete Schleifringe aufweist, die voneinander isoliert beabstandet sind, wobei der Schleifringkörper mit der Welle drehfest verbunden ist und zumindest abschnittsweise zwischen der Innenseite des Schleifringkörpers und der Welle einen axial beidseitig offenen Hohlraum aufweist.

Damit lässt sich nun erfindungsgemäß über den axial beidseitig offenen Hohlraum, ein innengekühlter Schleifringkörper schaffen. Es ist dabei nicht nur der Schleifringkörper von radial innen kühlbar ist, sondern der Hohlraum trägt u.a. auch zur Kühlung der Welle in diesem Bereich der Welle bei. Der Hohlraum bildet dort also eine Wärmesenke im Betrieb des Schleifringsystems und damit der dynamoelektrischen Maschine.

Da die Welle in einer bevorzugten Ausführungsform zumindest in dem axialen Bereich des Schleifringkörpers hohl ausgeführt ist, um über elektrische Leiter die Erregerleistung von dem Schleifringsystem in den Rotor bzw. Läufer zu führen, sind durch den kühlbaren Wellenabschnitt auch die dort verlaufenden Leiter kühlbar.

Die Leiter sind als flexible Leiter, beispielsweise Litzenleiter oder als starre Leiter, in Form eines Schienensystems ausgeführt und dienen der Erreger eines Wicklungssystems des Rotors bzw. Läufers.

Durch die erfindungsgemäße Ausgestaltung des Schleifringkörpers sind nunmehr der Schleifringkörper und zusätzlich folgende Komponenten kühlbar. Die Welle, insbesondere der axiale Wellenabschnitt und bei einer Hohlwelle, die in der Welle verlaufenden, insbesondere angeordneten Litzenleiter. Mit anderen Worten, der Schleifringkörper, die Welle und die Leiter für die Erregerleistung, die in der Welle, bzw. dem axialen Hohlwellenabschnitt verlaufen, können nunmehr zielgerecht gekühlt werden, d.h. die Wärmelast dieser Komponenten kann durch ein Kühlmittel, insbesondere einen Kühlluftstrom aufgenommen werden.

Die Schleifringe weisen eine Ringform auf, d.h. sie sind innen hohl und weisen eine definierte Ringbreite auf. Sie dienen der Übertragung von elektrischer Energie eines statischen Versorgungssystems auf einen rotierenden Teil (Läufer) einer doppelgespeisten Asynchronmaschine. Die Übertragung findet dabei in der Regel mittels (Schleif-)Bürsten aus Kohle statt, die entlang einer Oberfläche der Schleifringe geführt werden und dabei elektrische Energie auf die Schleifringe übertragen, die diese dann über elektrische Leiter dem Wicklungssystem des Läufers zur Verfügung stellt.

Die einzelnen Schleifringe jeder elektrische Phase sind in axialer Richtung jeweils von Isoliersegmenten umgeben, die die Schleifringkörper gegeneinander elektrisch isolieren. Ein Erdungsring ist gegenüber dem benachbarten Schleifring ebenfalls isoliert. Am anderen axialen Ende des Schleifringkörpers ist ein Tragring angeordnet, der mittels Verbindungsmittel (z.B. Bolzen) u.a. mit den einzelnen Schleifringen und den Isolierkörpern verbunden ist, um dem Schleifringkörper die nötige mechanische Stabilität zu verschaffen.

Der Schleifringkörper weist bei einem zu übertragenden Drehstromsystem drei Schleifringe, einen Erdungsring, der mit der Tragstruktur elektrisch verbunden ist und eine Isolierhülse auf, um die Schleifringe gegenüber dem Erdungsring und/oder untereinander zu isolieren. Die Isolierhülse ist auf dem jeweiligen Abschnitt der Tragstruktur angeordnet.

Regelmäßig wird über jeden Schleifring eine andere elektrische Phase des Drehstromsystems geführt. Der Erdungsring ist mit dem Erdungssystem beispielsweise der dynamoelektrischen Maschine und/oder einer Gesamtanlage verbunden.

In einer Ausführungsform ist der Hohlraum als umfängliche Aussparung ausgeführt, so dass der Schleifringkörper zumindest auf zwei umfänglich verlaufenden voneinander beabstandeten Endabschnitten bzw. Begrenzungselementen mit der Welle drehfest verbunden ist und so den Hohlraum schafft, der einen Kühlabschnitt darstellt. Diese Endabschnitte bzw. Begrenzungselemente, sind insbesondere als Ringe oder Stege ausführbar. Sie sind Teil der Tragstruktur und/oder der Welle. Damit sind sie einstückig mit dem einen oder dem anderen Teil ausgebildet und formen durch ein axiales Aufstecken des Schleifringkörper auf die Welle bzw. Hohlwelle den Kühlabschnitt. In den Endabschnitten bzw. Begrenzungselementen, insbesondere den Ringen bzw. Stegen sind axial verlaufend Ausnehmungen oder Bohrungen vorhanden, die die oben beschriebene Kühlung ermöglichen.

Dabei sind nun am Umfang der Tragstruktur und/oder Welle in dem Bereich der drehfesten Verbindung, beispielsweise einer Schrumpfung, diese Ausnehmungen oder im Wesentlichen axial verlaufenden Bohrungen vorgesehen. Diese Ausnehmungen oder im Wesentlichen axial verlaufenden Bohrungen sind sowohl auf der Lagerseite (also der dem Läufer zugewandten Seite) als auch auf der Anschlussseite (also der dem Läufer abgewandten Seite) vorgesehen.

Die Kühlung erfolgt beispielsweise nun derart, dass auf der Lagerseite, durch weitere Ausnehmungen am Erdungsring, Kühlluft angesaugt oder gedrückt wird. Diese Kühlluft gelangt durch den Kühlabschnitt - also über diese Ausnehmungen oder im Wesentlichen axial verlaufenden Bohrungen der Endabschnitte in den Hohlraum, nimmt dort die Wärmelast auf. Über einen Lüfter, beispielsweise auf der Anschlussseite wird die erwärmte Luft über Öffnungen in einem Schleifringgehäuse nach außen befördert. Dort wird diese erwärmte Luft rückgekühlt.

In einer weiteren Ausführungsform ergänzt die oben genannte Kühlung einen vorhandenen Kühlkreislauf, bei dem durch Radiallüfter Bürsten und Schleifringoberfläche bereits gekühlt werden. Durch den innengekühlten Schleifringkörper liegt damit ein weiterer Kühlkreislauf für die Welle, die in der Welle verlaufenden Leiter, als auch den Schleifringkörper vor.

Durch diesen Kühlkreislauf werden die Temperaturen der Litzenleiter oder eines Schienensystems in der Welle und des Schleifringkörpers durch den zusätzlich geschaffenen Kühlkreislauf deutlich reduziert. Somit sind höhere Leistungen mit den gleichen Komponenten im gleichen Bauraum des Schleifringsystems realisierbar, was sich äußerst kostensparend auswirkt.

Durch diese Konstruktion wird kühle Umgebungsluft durch den stark erwärmten Bereich zwischen Welle und Schleifringkörper also den Hohlraum geführt und somit werden auch die Leiter, insbesondere Litzenleiter in der Welle bzw. dem Hohlwellenabschnitt gekühlt. Die Abfuhr der erwärmten Luft geschieht durch Öffnungen am Erdungsring und durch Ausnehmungen bzw. Bohrungen auf der Lager- und auf der Anschlussseite am gesamten Umfang des Schleifringkörpers in den Endabschnitten. Die kühlere Luft wird durch diese Öffnungen und die Ausnehmungen bzw. Bohrungen in den Hohlraum zwischen Welle und Schleifringkörper geführt.

Der zu erzeugende Luftstrom wird durch einen eigenen oder einen bereits vorhandenen Lüfter im Schleifringgehäuse unterstützt. Die Luft wird dadurch direkt an die erwärmten Stellen des Schleifringkörpers, der Welle und indirekt der Litzenleiter geführt. Die Bereiche zwischen Welle, Schleifringkörper und der Litzen bleiben dadurch in dem zulässigen Temperaturbereich und eine Überhitzung des Schleifringsystems wird somit verhindert. Ein Schleifringkörper mit diesem Kühlkonzept kann somit für deutlich höhere Leistungen als bisher eingesetzt werden.

Konkret kann der Hohlraum radial innerhalb des Schleifringkörpers geschaffen werden, indem im Bereich des angestrebten Hohlraumes die Welle eine Durchmesserreduktion über eine vorgegebene axiale Länge und/oder der Schleifringkörper eine Durchmessererweiterung aufweist. Damit ist der Schleifringkörper zumindest über zwei umfänglich verlaufenden voneinander beabstandeten Begrenzungselementen, wie Ringen bzw. Stegen mit der Welle drehfest verbunden. Damit stellt sich der Hohlraum ein, der einen Kühlabschnitt darstellt. Die Begrenzungselemente, also die Ringe bzw. Stege sind Teil der Tragstruktur des Schleifringkörpers und/oder der Welle. Damit sind sie einstückig mit dem einen oder dem anderen Teil ausgebildet und formen durch ein axiales Aufstecken des Schleifringkörper auf die Welle bzw. Hohlwelle den Kühlabschnitt. In den Begrenzungselementen z.B. den Ringen bzw. Stegen sind axial verlaufend Ausnehmungen vorhanden, die die oben beschriebene Kühlung ermöglichen.

Der Hohlraum kann zur Steigerung der Kühleffizienz mäandernde oder labyrinthähnliche Strukturen aufweisen, die die Verweildauer eines Kühlluftstromes im Hohlraum verlängern und damit dem Kühlluftstrom gestatten dort eine höhere Wärmelast aufzunehmen.

Die Strukturen können eigene, einlegbare Elemente sein, oder bereits in den Schleifringkörper und/oder die Welle eingearbeitet sein.

Grundsätzlich werden durch die Kühlung des an der elektrischen Maschine axial anliegenden Schleifringkörpers auch die Temperaturen der elektrischen Maschine, wie beispielsweise Welle und Rotor deutlich reduziert.

Die dadurch niedrigere Temperatur des Schleifringsystems erlaubt kleinere Baugrößen der Schleifringkörper bzw. des Schleifringsystems. Das Schleifringsystem kann dadurch mit mehr Bürsten pro Phase belastet werden, was ohne eine derartige Kühlung nicht möglich wäre. Somit sind höhere Leistungsstufen bei gleichem Bauvolumen des Schleifringsystems als bisher realisierbar.

Eine zusätzliche Kühlung des Schleifringsystems erfolgt außerdem durch entsprechend gestaltete Schleifringe, beispielsweise Rillen in den Laufflächen, die einen radialen Luftzug ermöglichen, als auch axiale Bohrungen im Schleifring die eine axiale Kühlluft ermöglichen. Ebenso können ergänzend oder stattdessen die Isoliersegmente zwischen den Schleifringen eine lüfterähnliche Gestaltungen aufweisen, um eine Verwirbelung im Schleifringgehäuse bei Drehung des Schleifringkörpers zu schaffen.

Ebenso kann eine Kühlung der Bürsteneinrichtung ergänzend vorgenommen werden, indem die Bürstenschächte mit oberflächenvergrößernden Maßnahmen versehen worden sind. Ebenso tragen gezielt ausgerichtete Luftströme mittels Fremdlüfter und/oder Leitvorrichtungen ebenso zur Kühlung innerhalb des Schleifringgehäuses bei.

Die Schleifringe, deren Laufflächen, die Bürstentemperaturen etc. bleiben durch diese Maßnahmen somit in einen betriebsgerechten Temperaturbereich und der Betrieb der dynamoelektrischen Maschine ist gegen Überhitzung geschützt. Damit können insgesamt wesentlich kleinere, günstigere Bauteile verwendet werden, und somit ein problemloser Betrieb der elektrischen Maschine sichergestellt. Neben einer Anwendung bei Generatoren, beispielsweise für Windkraftanlagen, kann die Erfindung auch bei Motoren zum Einsatz kommen.

Die Kühlkreisläufe können als geschlossene Kühlkreisläufe oder offene Kühlkreisläufe ausgebildet sein. Bei einem geschlossenen Kühlkreislauf wird das Kühlmedium, z.B. Luft gezielt rückgekühlt, beispielsweise durch einen Wärmetauscher. Bei einem offenen Kühlkreislauf wird das Kühlmedium, z.B. Luft aus der Umgebung verwendet und erwärmt an die Umgebung wieder abgegeben.

Die Erfindung sowie weitere vorteilhafte Ausgestaltungen der Erfindung werden im Folgenden anhand prinzipiell dargestellter Ausführungsbeispiele näher erläutert, darin zeigen:
- FIG 1: Längsschnitt einer dynamoelektrischen Maschine,
- FIG 2: Längsschnitt eines Schleifringkörpers,
- FIG 3: eine teilperspektivische Darstellung eines Schleifringkörpers,
- Fig 4: eine weitere perspektivische Darstellung eines Schleifringkörpers,
- FIG 5: Längsschnitt eines Schleifringsystems,
- FIG 6: Längsschnitt eines Schleifringsystems mit prinzipieller Darstellung eines Kühlluftstromes,
- FIG 7: perspektivische Darstellung eines offenen Schleifringsystems.

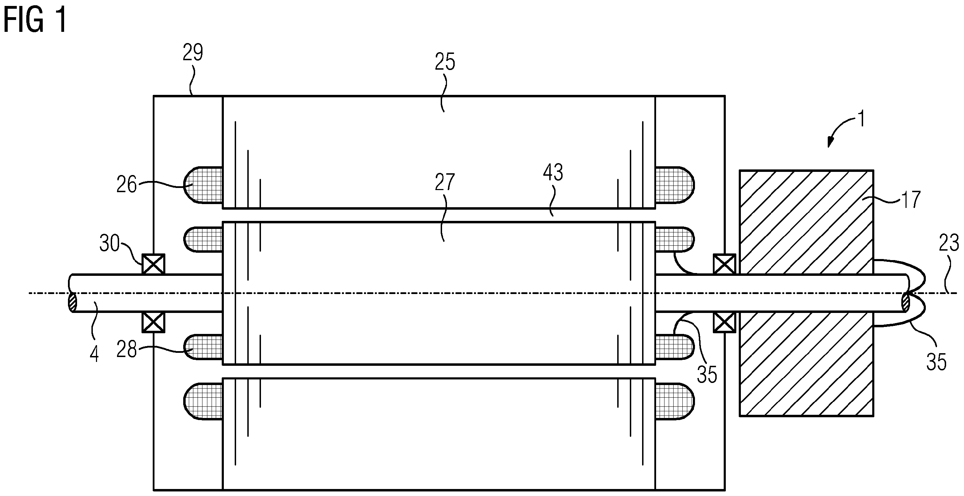

FIG 1 zeigt in einem prinzipiellen Längsschnitt eine dynamoelektrische Maschine 24 in einem Gehäuse 29. In dem Gehäuse 29 ist ein Stator 25 eingesetzt, der ein Wicklungssystem 26 in nicht näher dargestellten Nuten eines Blechpakets des Stators 25 aufweist. An den Stirnseiten des Stators 25 sind durch das Wicklungssystem 26 Wickelköpfe gebildet. Durch einen Luftspalt 43 vom Stator 25 beabstandet, befindet sich ein drehbar gelagerter Rotor 27 mit einem Wicklungssystem 28, das an den Stirnseiten des Rotors 27 ebenfalls Wickelköpfe ausbildet. Der Rotor 27 ist über Lager 30 und Lagerschilde am Gehäuse 29 der Maschine 24 abgestützt.

Zur elektrischen Erregung des Rotors 27 befindet sich in axialer Verlängerung der dynamoelektrischen Maschine 24 ein Schleifringsystem 1, das über Zuleitungen 35 mit dem Wicklungssystem 28 des Rotors 27 verbunden ist. Dabei verlaufen die Zuleitungen 35 vorzugsweise in einem Hohlwellenabschnitt der Welle 4.

Das Schleifringsystem 1 weist, wie dies auch den folgenden Figuren zu entnehmen ist, einen Schleifringkörper 2 und eine Bürsteneinheit 14 auf, die in einem Schleifringgehäuse 17 untergebracht sind. Der Schleifringkörper 2 weist dabei axial hintereinander angeordnete Schleifringe 3 auf, die jeweils von einem Isoliersegment 7 axial beabstandet sind. An einer Stirnseite des Schleifringkörpers 2 befindet sich ein Erdungsring 6 und an der anderen Stirnseite des Schleifringkörpers 2 befindet sich ein Isolationsring 5. An diesem Isolationsring 5 treten Kontaktbolzen 8 axial aus, die jeweils mit dem jeweils zugeordneten Schleifring 3 elektrisch kontaktiert sind.

Die Bürsteneinheit 14 ist in einem Schleifringgehäuse 17 positioniert, und weist pro elektrischer Phase, also pro Schleifring 3 eine oder mehrere Bürsten 15 auf, die dem jeweiligen Schleifring 3 bzw. dem Erdungsring 6 zugeordnet sind. Die Bürsten 15 sind jeweils in einer Bürstenhalterung 22 angeordnet, die auch dementsprechende elektrischen Kontaktiereinrichtungen bereitstellt. Dabei sind die Bürsten 15 pro Schleifring 3 nebeneinander und/oder hintereinander angeordnet.

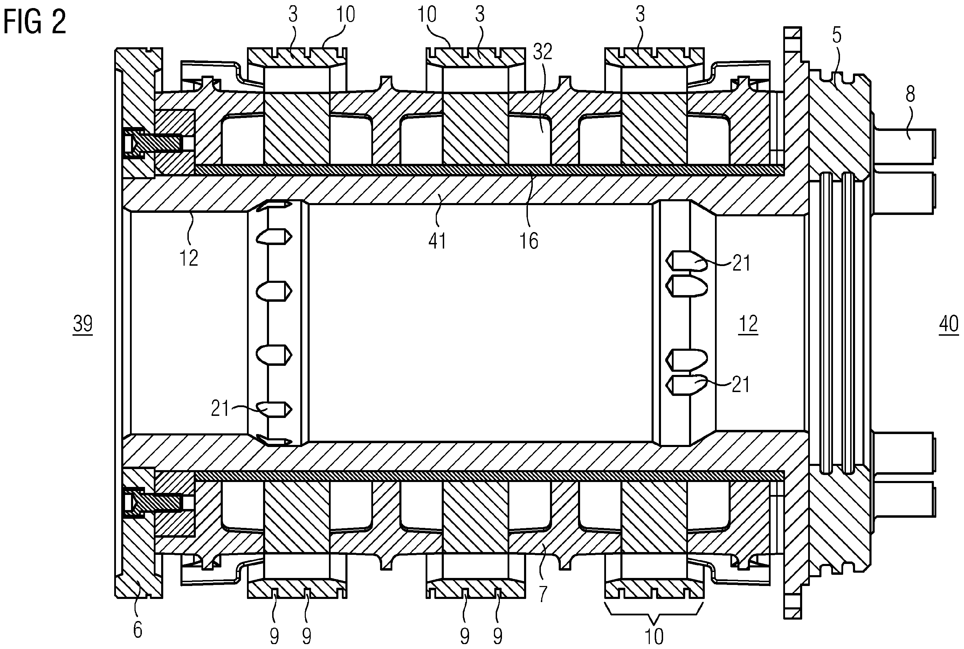

FIG 2 zeigt in einem prinzipiellen Längsschnitt einen Schleifringkörper 2, wobei die Schleifringe 3 axial hintereinander und von jeweiligen Isoliersegmenten 7 voneinander beabstandet sind. Die Schleifringe 3 sind auf einer Isolierhülse 16 angeordnet, die auf einer Tragstruktur 41 bzw. Nabe angeordnet ist. Diese Tragstruktur 41 befindet sich auf elektrisch gleichem Potenzial wie der Erdungsring 6. Jeder der Schleifringe 3 ist mit einem oder mehreren Kontaktbolzen 8 elektrisch kontaktiert, sodass die auf der Lauffläche 40 des jeweiligen Schleifringes 3 bereitgestellte elektrische Energie dem Kontaktbolzen 8 zuführbar ist, um von dort über Leiter, insbesondere Litzenleiter durch die Hohlwelle bzw. Hohlwellenabschnitt zum Wicklungssystem 28 des Rotors 27 geführt zu werden.

Der Schleifringkörper 2 weist an seiner radial inneren, der Welle 4 zugewandten Seite einen axialen Abschnitt auf, der bezüglich der ihn eingrenzenden Endabschnitte 12 zurückgesetzt ist, also einen größeren Innenradius aufweist. In diesen Endabschnitten 12 sind Öffnungen 21 vorhanden, die als Belüftungsbohrungen, bzw. Entlüftungsbohrungen wirken. Dieser vergleichsweise größere Innenradius schafft, sobald der Schleifringkörper 2 sich auf einer Welle 4 bzw. Hohlwelle befindet, einen Hohlraum 11 zwischen den beiden Endabschnitten 12 der Tragstruktur 41, also den axialen Begrenzungselementen des Hohlraumes 11, die als Ringe oder Stege ausgeführt sein können.

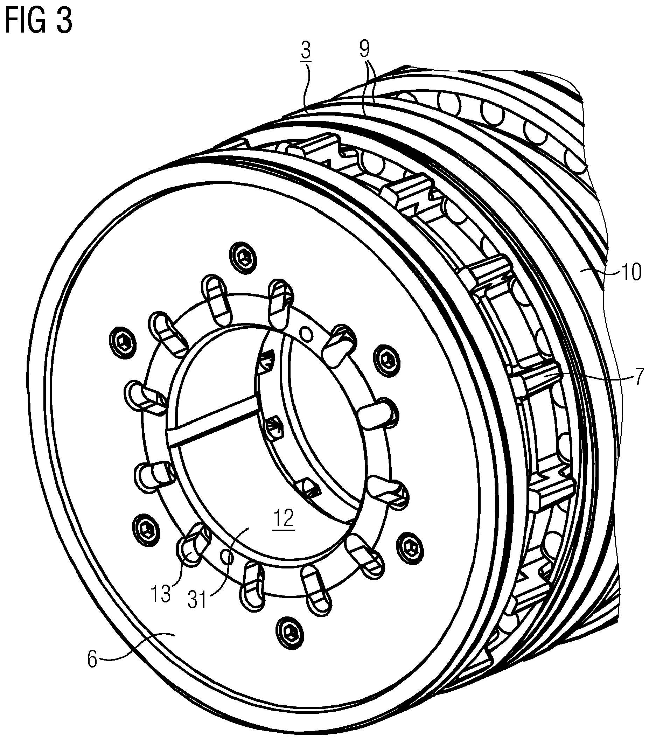

FIG 3 zeigt in einer teilperspektivischen Darstellung einen Schleifringkörper 2 von einer Stirnseite, genauer von der Maschinenseite, bzw. Lagerseite 39. Dabei ist der Erdungsring 6 an der Stirnseite des Schleifringkörpers 2 zu sehen und dessen Beabstandung von einem Schleifring 3 durch ein Isoliersegment 7. In diesem Fall ist auch die Lauffläche 10 eines Schleifrings 3 zu sehen, auf der sich Rillen 9 befinden, die auch eine radiale Belüftung des Schleifrings 3 zulassen. Am Erdungsring 6 sind Öffnungen 13 vorgesehen, die einen Zustrom von Luft über die Öffnungen 21 der Endabschnitte bzw. Begrenzungselemente in den Hohlraum 11 gestatten, der sich zwischen Welle 4 und Schleifringkörper 2 ergibt.

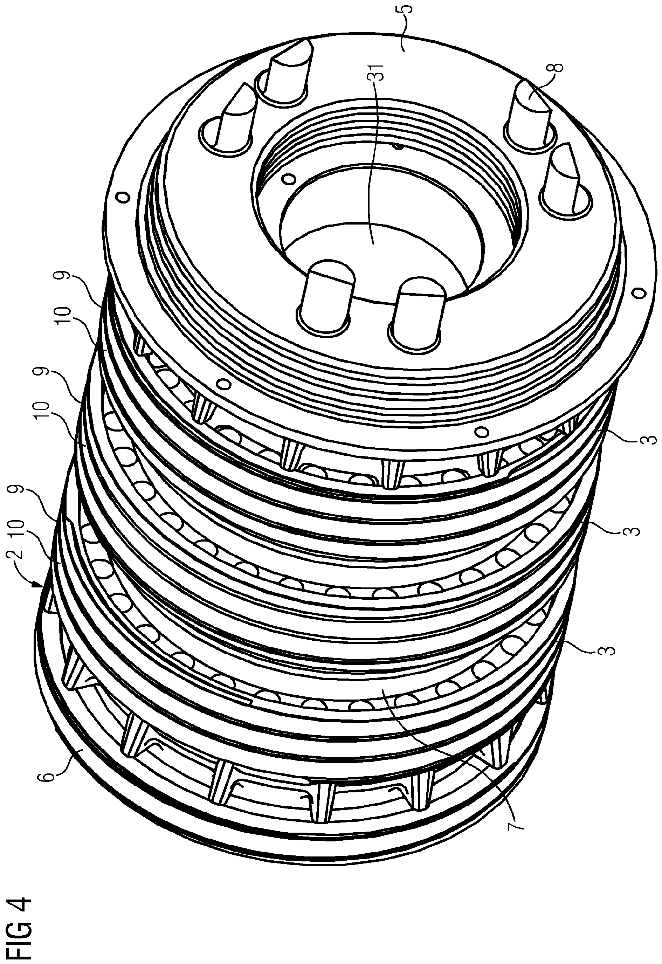

FIG 4 zeigt in einer perspektivischen Darstellung den Schleifringkörper 3 von seiner anderen Stirnseite, der Anschlussseite 40. Aus dem Isolationsring 5 treten axial Kontaktbolzen 8 aus, wobei dabei jeder elektrischen Phase bzw. jedem Schleifring 3 in diesem Fall zwei Kontaktbolzen 8 zugewiesen sind. Axial daran schließt sich eine Abfolge Isolationssegmente 7 und Schleifringe 3 an. Die axiale Reihung wird durch den Erdungsring 6 beendet. Die Laufflächen 10 der einzelnen Schleifringe 3 weisen Rillen 9 auf, die radial durchgängig sind und so gegebenenfalls eine weitere Kühlung des Schleifringes 3 gestatten. Des Weiteren weisen diese Schleifringe 3 axiale Öffnungen auf, die ebenfalls zur Kühlung der Schleifringe 3 beitragen. Unabhängig davon bzw. ergänzend dazu sind die Isoliersegmente 7 an ihrem radial äußeren Rand schaufelähnlich ausgeführt, sodass bei Rotation des Schleifringkörpers 2 eine Luftverwirbelungen eintritt.

Der Schleifringkörper 2 zeigt eine Zentralöffnung 31, in die eine Welle 4, eine Welle 4 mit axialem Hohlwellenabschnitt oder eine Hohlwelle eingesetzt wird. Diese Welle 4 ist mit dem Schleifringkörper 2 drehfest verbunden. Über die Kontaktbolzen 8 und daran angeschlossene elektrische Zuleitungen 35, wird nunmehr über eine Hohlwellenabschnitt der Welle 4 oder der Hohlwelle das Wicklungssystem 28 des Rotors 27 elektrisch versorgt.

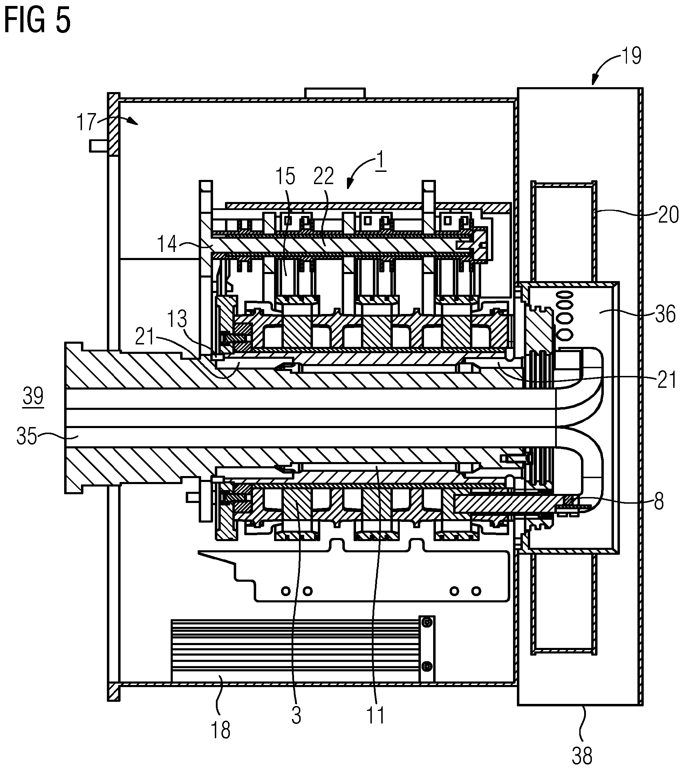

FIG 5 zeigt in einem Längsschnitt ein Schleifringsystem 1, mit einem Schleifringkörper 2 und einer Bürsteneinheit 14.

Der Schleifringkörper 2 ist auf der Welle 4 mit Hohlwellenabschnitt bzw. Hohlwelle drehfest positioniert. Von dem Isolationsring 5 und den dort angeordneten Kontaktbolzen 8 sind Zuleitungen 35 in Form von Litzenleitern durch die Hohlwelle bzw. Hohlwellenabschnitt der Welle 4 zum - in dieser Figur - nicht näher dargestellt Wicklungssystem 28 des Rotors 27 geführt. Diese Zuleitung 35 liegen entweder frei in der Hohlwelle oder sind in eine Art Wärmeleitpaste gebettet, um einen guten Wärmekontakt zur Welle 4 zu erhalten.

Durch den nunmehr ausgebildeten Hohlraum 11 zwischen der äußeren Umfangsfläche der Hohlwelle und der inneren Fläche des Schleifringkörpers 2 kann nunmehr über Bohrungen 21 in den auf dem Hohlwellenabschnitt aufliegenden Endabschnitten 12, die insbesondere als Stege ausgeführt sind, eine Kühlung des Schleifringkörpers 2 von innen und der Welle 4 stattfinden.

Die Kühlung erfolgt dabei insbesondere durch einen Luftstrom, der durch eine Lüftereinheit 19 auf der Anschlussseite 40 angeordnet ist. Dabei saugt oder drückt ein Lüfter 20 einen Kühlluftstrom in das Schleifringgehäuse 17, das durch dementsprechende Gestaltung von Führung und Leiteinrichtungen den Kühlluftstrom führt und an die Wärmequellen des Schleifringsystems 1 lenkt.

Der Lüfter 20 in dem vorliegenden Fall ist insbesondere für die Kühlluft 33 durch den Hohlraum 11 verantwortlich. Dabei wird Luft aus der Umgebung, bei einem Windgenerator aus der Gondel, eingesaugt und über einen Luftaustritt 38 am Schleifringsystem 1 wieder ausgegeben.

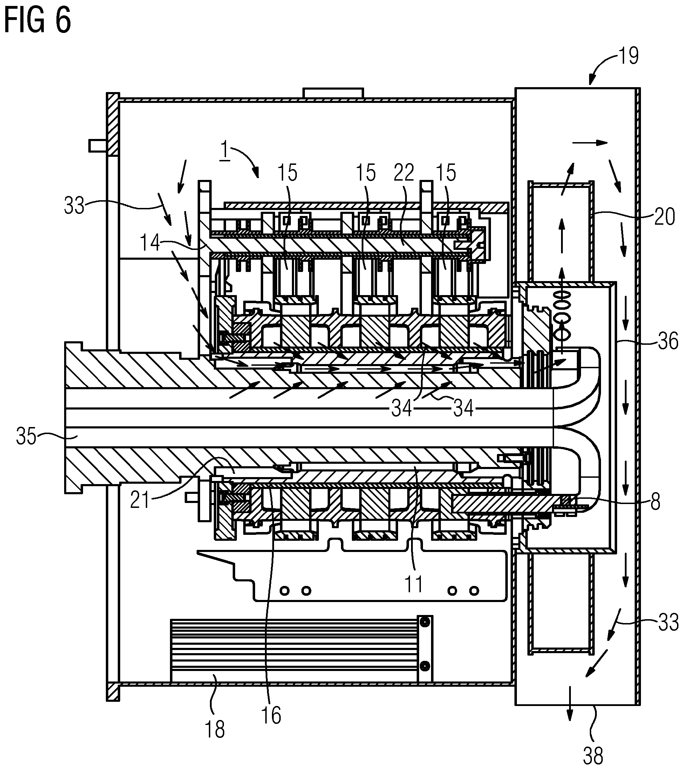

FIG 6 zeigt den Verlauf der Kühlluftströme 33 in einer Anordnung gemäß Figur 5. Dabei ist insbesondere zu sehen, dass ein Wärmeeintrag 34 in die durch den Hohlraum 11 geführten Kühlluft 33 von den Schleifringen 3 als auch von der Welle 4 und damit auch von den Zuleitungen 35 (Litzenleiter oder Schienensystem) erfolgt.

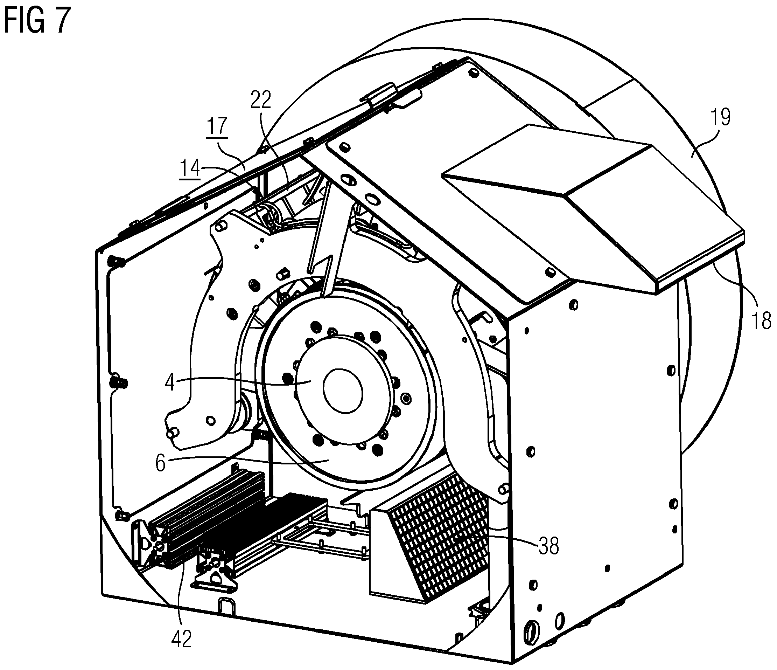

FIG 7 zeigt in perspektivische Darstellung das Schleifringsystem 1 von der Lagerseite 39. Dabei ist das Schleifringgehäuse 17 mit seinen Lufteinlässen 18 und Luftauslässen 38 gezeigt, die eine Kühlung des Schleifringsystems 1 ermöglichen. Die Bürsteneinheit 14 stützt sich im Schleifringgehäuse 17 ab. Radial weiter innen und auf einer Welle 4 bzw. Hohlwelle bzw. Hohlwellenabschnitt positioniert, ist der Schleifringkörper 2 mit seinen Schleifringen 3. Der Erdungsring 6 zeigt Öffnungen 13, über die nunmehr eine Kühlluft 33 über die Bohrungen 21 der Endabschnitte 12 in bzw. aus dem Hohlraum 11 geführt werden kann. Axial an das Schleifringgehäuse 17 schließt sich eine Lüftereinheit 19 an, die den Lüfter 20 als auch deren Verteilung der Kühlluftströme aussteuert.

Mit Hilfe des Lüfters 20 wird nun die erwärmte Luft vorzugsweise aus dem Hohlraum 11 angesaugt und durch die Lüfterkappe 36 aus dem Schleifringgehäuse 17 nach außen abgeführt. Dabei werden auch die Kontaktbolzen 8 mitgekühlt.

Hierdurch können die Temperaturen der Schleifringsystems 1 sowie der gesamten elektrischen Maschine 24 deutlich reduziert werden. Dies führt dazu, dass kleinere Baugrößen der Schleifringsystems 1 möglich werden oder bei gleicher Baugröße höhere Leistungsstufen erreicht werden.

Zusätzlich zu dieser Kühlung des Hohlraumes 11, ist über die Rillen 9 der Laufflächen 10, als auch den axialen Öffnungen in den Schleifringen 3 und den lüfterähnlich ausgeführten Isoliersegmenten 7 eine zusätzliche Kühlung des Schleifringsystems 1 möglich. Die Ausprägungen des Isoliersegments 7 bzw. gegebenenfalls mehrere Isoliersegmente 7 bilden idealerweise dabei einen Lüfter, der zur Verteilung eines Kühlluftstroms in Richtung der zu kühlenden Teilen der elektrischen Maschine 24 vorgesehen ist.

Derartige dynamoelektrische Maschinen 24 mit einem Schleifringsystem 1 werden insbesondere als doppelgespeiste Asynchronmaschinen (ASM) ausgeführt, die als Generatoren bei Windkraftanlagen vorzugsweise im Leistungsbereich zwischen 0,5 und 8 MW eingesetzt werden. Dabei können die Windkraftanlagen On-shore aber auch Off-shore ausgestellt sein.

## Patentansprüche

1. Dynamoelektrische Maschine (24), insbesondere doppelt gespeiste Asynchronmaschine (ASM) mit
- einem Stator (25) und einem auf einer Welle (4) drehfest angeordneten Rotor (27) mit jeweils einem Wicklungssystem (26,28), wobei das Wicklungssystem (28) des Rotors (27) über ein Schleifringsystem (1) elektrisch kontaktierbar ist,
- einer elektrischen Energieübertragungseinheit des Schleifringsystems (1), insbesondere einer Bürsteneinheit (14), wobei pro elektrischer Phase eine oder mehrere Bürsten (15) einem Schleifring (3) zugeordnet sind, wobei die Bürsten (15) an einer Bürstenhalterung (22) angeordnet sind,
- einem Schleifringkörper (2) des Schleifringsystems (1), der axial hintereinander angeordnete, einer elektrischen Phase zugeordnete Schleifringe (3) aufweist, die voneinander isoliert beabstandet sind, wobei der Schleifringkörper (2) mit der Welle (4) drehfest verbunden ist und zumindest abschnittsweise zwischen der Innenseite des Schleifringkörpers (2) und der Welle (4) einen axial beidseitig offenen Hohlraum (11) aufweist.

2. Dynamoelektrische Maschine (24), insbesondere doppelt gespeiste Asynchronmaschine (ASM)nach Anspruch 1, **dadurch gekennzeichnet , dass** der Hohlraum (11) als umfängliche Aussparung ausgeführt ist, so dass der Schleifringkörper (2) zumindest auf zwei umfänglich verlaufenden axial voneinander beabstandeten Begrenzungselementen (12), insbesondere Ringe oder Stege aufliegt, die Bohrungen (21) aufweisen.

3. Dynamoelektrische Maschine (24), insbesondere doppelt gespeiste Asynchronmaschine (ASM), nach Anspruch 1 oder 2, **dadurch gekennzeichnet, dass** im Bereich des Hohlraumes (11) die Welle (4) eine Durchmesserreduktion über eine vorgegebene axiale Länge und/oder der Schleifringkörper (3) eine Durchmessererweiterung aufweist.

4. Dynamoelektrische Maschine (24), insbesondere doppelt gespeiste Asynchronmaschine (ASM), nach Anspruch 1, 2 oder 3, **dadurch gekennzeichnet, dass** der Hohlraum (11) Mittel aufweist, die eine labyrinthähnliche und/oder mäandernde Struktur im Hohlraum (11) bilden, um die Verweildauer eines Kühlmediums, insbesondere eines Luftstroms zu erhöhen.

5. Dynamoelektrische Maschine (24), insbesondere doppelt gespeiste Asynchronmaschine (ASM), nach einem der vorhergehenden Ansprüche, **dadurch gekennzeichnet , dass** der Luftstrom durch zumindest einen Fremd- oder Eigenlüfter generierbar ist.

6. Windkraftanlage mit einer dynamoelektrischen Maschine (24) nach einem der vorhergehenden Ansprüche.
